# EUROPÄISCHE PATENTSCHRIFT

(11) **EP 1 243 475 B1**
(45) Veröffentlichungstag und Bekanntmachung des Hinweises auf die Patenterteilung: **07.03.2007**
(21) Anmeldenummer: 02005952.3
(22) Anmeldetag: 15.03.2002
(51) Int. Cl.: B60R 5/04

(54) **Laderaumabdeckung für Kraftwagen, wie für Kombinations-Personenkraftwagen od. dgl.**
Load compartment cover for vehicles, in particular for station wagons or the like
Couvercle pour le compartiment à bagages de véhicule, notamment pour voiture familiale ou similaire

(30) Priorität: 20.03.2001 DE 10113616
(43) Veröffentlichungstag der Anmeldung: 25.09.2002
(73) Patentinhaber: BOS GmbH & Co. KG, 73760 Ostfildern (DE)
(72) Erfinder: De Ceuster, Peter, 2222 Itegem (BE)
(74) Vertreter: Patentanwälte Ruff, Wilhelm, Beier, Dauster & Partner

(56) Entgegenhaltungen:
- FR-A- 2 706 015
- FR-A- 2 726 401
- PATENT ABSTRACTS OF JAPAN vol. 008, no. 154 (M-310), 18. Juli 1984 (1984-07-18) & JP 59 050836 A (NISSAN JIDOSHA KK), 24. März 1984 (1984-03-24)
- PATENT ABSTRACTS OF JAPAN vol. 008, no. 080 (M-289), 12. April 1984 (1984-04-12) & JP 58 224831 A (NISSAN JIDOSHA KK), 27. Dezember 1983 (1983-12-27)
- 981.551.3BP.00: "Passat Betriebsanleitung" Juli 1997 (1997-07), VOLKSWAGEN * Seite 64 - Seite 64 *

## Beschreibung

Die Erfindung betrifft eine Laderaumabdeckung für Kraftwagen, wie für Kombinations-Personenkraftwagen od. dgl.. Eine solche gattungsgemäße Laderaumabdeckung ist beispielsweise in der DE 42 00 021 A1 beschrieben.

Der Erfindung liegt die Aufgabe zugrunde, die bekannte Laderaumabdeckung in baulich einfacher Weise weiterzuentwickeln, um zusätzliche Verwendungsmöglichkeiten zu schaffen.

In Verbindung mit den Merkmalen des Oberbegriffs wird diese Aufgabe entsprechend der Erfindung durch die Gesamtheit der Merkmale des Anspruchs 1 gelöst.

Entsprechend der Erfindung ist es möglich geworden, das Rollogehäuse einer Laderaumabdeckung mit einem elektrischen Verbraucher, wie z.B. mit einem Elektromotor, auszustatten und hierbei die elektrische Einspeisung zugleich mit dem Einsetzen und Verriegeln des Rollogehäuses herzustellen. Die erfindungsgemäßen elektrischen Kontaktverbindungen können sowohl der Leistungseinspeisung, also z.B. der Einspeisung für einen Elektromotor, als auch der Kontaktverbindung zwischen Signalleitungen dienen.

Eine elektrische Steckverbindung, die gesondert von Hand betätigt werden muss, ist von einer Laderaumabdeckung gemäß der DE 197 54 223 A1 an sich bekannt.

JP-A-58 224831 beschreibt eine Laderaumabdeckung mit einer elektrischen Kontaktverbindung, so daß die Laderaumabdeckung mit einem elektrischen Verbraucher ausgestattet werden kann, wobei die elektrische Einspeisung zugleich mit dem Einsetzen der Laderaumabdeckung hergestellt werden kann. Es wird dort vorgeschlagen, eine elektrische Kontaktierung zwischen einer zweigeteilten Abdeckplatte für einen Laderaum und fahrzeugfesten Aufnahme zu schaffen, indem die zweigeteilte Auflageplatte in ihrem Scharnierbereich in entsprechenden Aufnahmen der Fahrzeugseitenwandungen eingesetzt wird, wobei die fahrzeugseitige Aufnahme mit mindestens einem flächigen elektrischen Kontaktpaar und die Laderaumabdeckung mit mindestens einem mit dem elektrischen Kontaktpaar zusammenwirkenden korrespondierenden flächigen elektrischen Gegenkontaktpaar ausgebildet werden, wobei das Kontaktpaar und das Gegenkontaktpaar in einer Fuge zwischen der fahrzeugseitigen Aufnahme und der Laderaumabdeckung angeordnet sind, und wobei die Kontaktverbindung zwischen dem Kontaktpaar und dem korrespondierenden Gegenkontaktpaar durch flächige Anlage gegeneinander ohne Verriegelung hergestellt wird.

Weitere vorteilhafte Erfindungsmerkmale ergeben sich aus den Unteransprüchen.

In den Zeichnungen ist die Erfindung anhand eines bevorzugten Ausführungsbeispiels näher dargestellt, es zeigt
Fig. 1 eine mehr schematische Längsschnittansicht durch den Endbereich eines Rollogehäuses, welches in eine fahrzeugseitige Aufnahme eingesetzt ist,
Fig. 2 die fahrzeugseitige Aufnahme in mehr schematischer räumlicher Darstellung und
Fig. 3 ebenfalls schematisch räumlich dargestellt, ein Kontaktpaar und ein Gegenkontaktpaar in Alleinstellung.

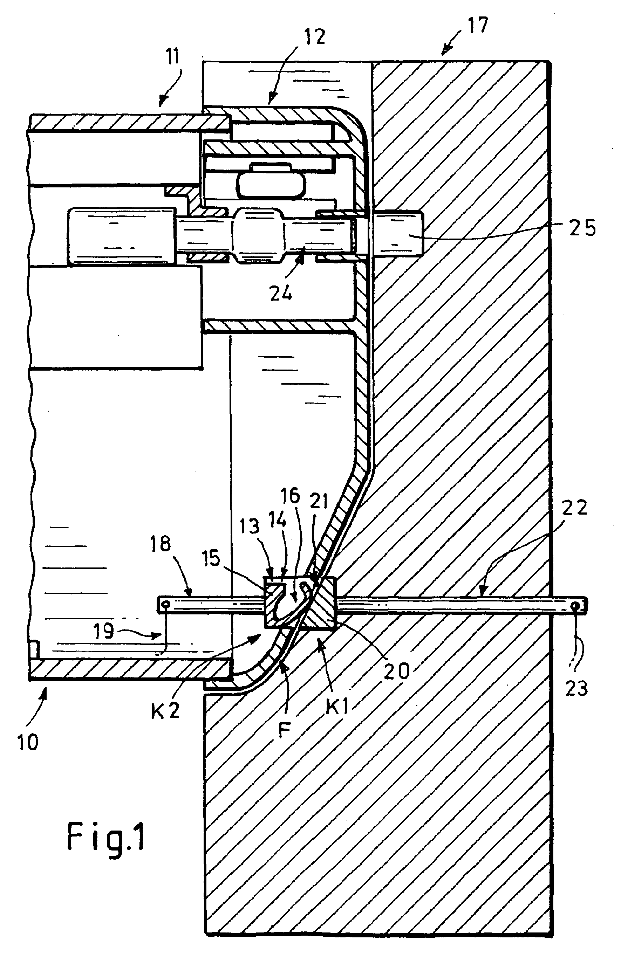

Die nur teilweise dargestellte Laderaumabdeckung 10 gemäß Fig. 1 zeigt den Endbereich eines Rollogehäuses 11, welches mit einer Endkappe 12 versehen ist.

Im unteren Bereich weist die Endkappe 12 zwei Aussparungen 13 auf, von denen in Fig. 1 nur eine gezeigt ist. Jede Aussparung 13 nimmt den Kopf 14 eines einzelnen Kontakts eines Gegenkontaktpaares K2 auf.

Der Kontaktkopf 14 besitzt ein massives Basisteil 15, von welchem eine etwa buckelförmige federnde Kontaktzunge 16 freigeschnitten und nach außen hin zur fahrzeugseitigen Aufnahme 17 hin herausgebogen ist.

Von jedem Basisteil 15 der beiden Einzelkontakte des Gegenkontaktpaars K2 ragt ein Anschlussstift 18 nach hinten in das Rollogehäuse 11 hinein. Jeder Anschlussstift 18 ist mit einer nur angedeuteten elektrischen Leitung 19 verbunden.

In der fahrzeugseitigen Aufnahme 17 ist ein Kontaktpaar K1, bestehend aus zwei Einzelkontakten, aufgenommen. Jeder Einzelkontakt des Kontaktpaars K1 weist einen massiven Kontaktkopf 20 mit einer geneigten ebenen Kontaktfläche 21 auf, an welcher sich die jeweilige Kontaktzunge 16 des Gegenkontaktpaars K2 beim Einsetzen des Rollogehäuses 11 gewissermaßen schabend und eigenfedernd abstützen kann, so dass etwaige Verunreinigungen, z.B. Oxydbeläge, bereits beim Einsetzen des Rollogehäuses 11 beseitigt werden können.

Die Kontaktelemente 21 und die Gegenkontaktelemente 16 befinden sich also in der Fuge F zwischen der fahrzeugseitigen Aufnahme 17 und dem Rollogehäuse 11.

Auch an den Kontaktkopf 20 eines jeden Einzelkontakts des Kontaktpaars K1 schließt sich ein Anschlussstift 22 an, welcher ebenfalls mit einer elektrischen Leitung 23 (nur angedeutet) verbunden ist.

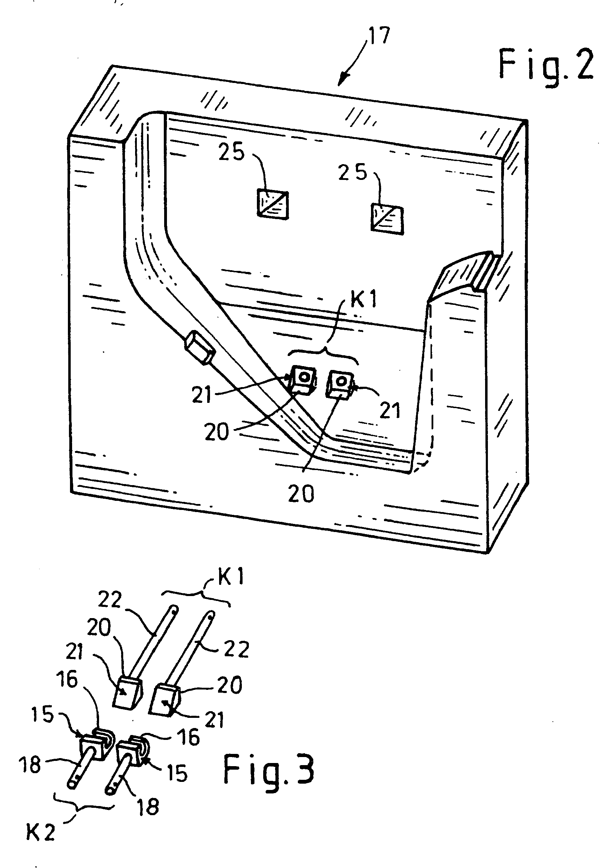

Während des Einsetzens des Rollogehäuses 11 werden entweder automatisch oder durch gesonderte Handbetätigung zwei Riegelstifte 24 (nur einer ist gezeigt) aus dem Rollogehäuse 11 ausgefahren und jeweils in eine korrespondierende Riegelaussparung 25 der fahrzeugseitigen Aufnahme 17 eingefahren (s.a. Fig. 2). Mit dieser Verriegelung des Rollogehäuses 11 in der fahrzeugseitigen Aufnahme 17 ist zugleich die elektrische Kontaktgabe zwischen den Kontaktzungen 16 des Gegenkontaktpaars K2 und den geneigten Kontaktflächen 21 der beiden Einzelkontakte des Kontaktpaares K1 gesichert.

## Patentansprüche

1. Laderaumabdeckung (10) für Kraftwagen, wie für Kombinations-Personenkraftwagen od. dgl., mit einer in einem Rollogehäuse (11) angeordneten, zumindest im Aufwickeldrehsinn antreibbaren Wickelwelle zur Aufnahme einer Werkstoffbahn, deren innerer Querrand an der Wickelwelle befestigt ist und deren äußerer Querrand fahrzeugseitig lösbar gehalten ist, wobei das Rollogehäuse (11) in fahrzeugseitigen Aufnahmen (17) lösbar befestigt und herausnehmbar angeordnet ist, **dadurch gekennzeichnet, dass** zumindest eine fahrzeugseitige Aufnahme (17) mindestens ein elektrisches Kontaktpaar (K1) und das Rollogehäuse (11) mindestens ein mit dem elektrischen Kontaktpaar (K1) zusammenwirkendes korrespondierendes elektrisches Gegenkontaktpaar (K2) aufweist, dass das Kontaktpaar (K1) und das Gegenkontaktpaar (K2) in einer Fuge (F) zwischen der fahrzeugseitigen Aufnahme (17) und dem Rollogehäuse (11) angeordnet sind, und dass die Kontaktverbindung zwischen dem Kontaktpaar (K1) und dem korrespondierenden Gegenkontaktpaar (K2) durch den Einbau des Rollogehäuses (11) hergestellt und durch eine Verriegelung (bei 24, 25) des Rollogehäuses (11) in den fahrzeugseitigen Aufnahmen (17) gesichert ist, wobei die Kontaktverbindung derart ausgeführt ist, dass sich das Kontaktpaar (K1) und das Gegenkontaktpaar (K2) beim Einsetzen des Rollogehäuses (11) schabend und eigenfedernd gegeneinander abstützen, wobei das Kontaktpaar (K1) und Gegenkontaktpaar (K2) eine Druckkontaktverbindung bilden.

## Claims

1. A loading space cover (10) for motor vehicles, such as for multipurpose vehicles or the like, having a winding roller arranged in a roller blind housing (11) and drivable at least in the winding-up direction of rotation, for holding a material web, the inner transverse edge of which web is secured to the winding roller and the outer transverse edge of which is detachably held at the vehicle side, wherein the roller blind housing (11) is detachably secured in vehicle-side seats (17) and is arranged to be removable therefrom, **characterised in that** at least one vehicle-side seat (17) comprises at least one pair of electrical contacts (K1) and the roller blind housing (11) comprises at least one corresponding pair of electrical counter-contacts (K2) co-operating with the pair of electrical contacts (K1), **in that** the pair of contacts (K1) and the pair of counter-contacts (K2) are arranged in a gap (F) between the vehicle-side seat (17) and the roller blind housing (11) and **in that** the contact connection between the pair of contacts (K1) and the corresponding pair of counter-contacts (K2) is produced by installation of the roller blinder housing (11) and is secured by interlocking (at 24, 25) of the roller blind housing (11) in the vehicle-side seats (17), wherein the contact connection is effected in such a manner that on insertion of the roller blind housing (11) the pair of contacts (K1) and the pair of counter-contacts (K2) rest against one another in rubbing contact and by virtue of inherent resilience, wherein the pair of contacts (K1) and the pair of counter-contacts (K2) form a pressure contact connection.

## Revendications

1. Couvercle de compartiment à bagages (10) pour véhicules automobiles, tels que des véhicules breaks ou véhicules similaires, comportant un arbre d'enroulement, qui est agencé dans un boîtier de store roulant (11) et peut être actionné au moins dans un sens de rotation d'enroulement et qui est destiné à recevoir une bande de matériau, dont le bord transversal intérieur est fixé contre l'arbre d'enroulement et dont le bord transversal extérieur est maintenu de manière amovible du côté du véhicule, le boîtier de store roulant (11) étant fixé de manière amovible dans des logements (17) du côté véhicule et étant agencé de manière à pouvoir être retiré, **caractérisé en ce qu'**au moins un logement (17) du côté véhicule comporte au moins une paire de contacts (K1) électriques et le boîtier de volet roulant (11) comporte au moins une paire de contacts complémentaires (K2) électriques correspondante coopérant avec la paire de contacts (K1) électriques, **en ce que** la paire de contacts (K1) et la paire de contacts complémentaires (K2) sont disposées dans une fente (F) entre le logement (17) du côté véhicule et le boîtier de volet roulant (11), et **en ce que** la liaison de contact entre la paire de contacts (K1) et la paire de contacts complémentaires (K2) correspondante est établie par la mise en place du boîtier de volet roulant (11) et est bloquée par un verrouillage (en 24, 25) du boîtier de volet roulant (11) dans les logements (17) du côté véhicule, la liaison de contact étant réalisée de telle sorte que la paire de contacts (K1) et la paire de contacts complémentaires (K2) prennent appui l'une contre l'autre par frottement et auto-élasticité lors de l'introduction du boîtier de volet roulant (11), la paire de contacts (K1) et la paire de contacts complémentaires (K2) formant une liaison de contact à pression.
